# EUROPÄISCHE PATENTANMELDUNG

(11) **EP 1 491 935 A1**
(43) Veröffentlichungstag der Anmeldung: **29.12.2004**
(21) Anmeldenummer: 04011547.9
(22) Anmeldetag: 14.05.2004
(51) Int. Cl.: G02B 27/26, G02B 5/30

(54) **Verfahren zur Herstellung eines polarisationsbeeinflussenden Betrachtungselementes**

(30) Priorität: 25.06.2003 DE 10328743
(71) Anmelder: Metronic AG, 97209 Veitshöchheim (DE)
(72) Erfinder: Schmitt, Peter, Dipl.-Phys., 97074 Würzburg (DE)
(74) Vertreter: COHAUSZ DAWIDOWICZ HANNIG & PARTNER

(57) **Zusammenfassung**

Die Erfindung betrifft ein Verfahren zur Herstellung eines polarisationsbeeinflussenden Betrachtungselementes, insbesondere zur Erzeugung/Betrachtung von dreidimensional wirkenden Bildern von Druckerzeugnissen oder Anzeigevorrichtungen, bei dem auf ein Substrat mittels eines Druckverfahrens wenigstens ein Auftragsmittel mit polarisationsbeeinflussender Wirkung auf wenigstens zwei benachbarte Zonen des Substrates derart aufgetragen wird, dass das Auftragsmittel in benachbarten Zonen unterschiedliche polarisationsbeeinflussende Wirkung hat. Die Erfindung betrifft weiterhin ein Betrachtungselement und eine Anzeigevorrichtung zur Anzeige frei programmierbarer Informationen.

## Beschreibung

Die Erfindung betrifft ein Verfahren zur Herstellung eines polarisationsbeeinflussenden Betrachtungselementes, insbesondere zur Erzeugung/Betrachtung von dreidimensional wirkenden z.B. einfarbigen oder mehrfarbigen Bildern mittels Druckerzeugnissen oder Anzeigevorrichtungen. Die Erfindung betrifft weiterhin ein Betrachtungselement, welches mit dem Verfahren hergestellt ist und eine Anzeigevorrichtung zur Anzeige frei programmierbarer Information mittels einzeln ansteuerbarer Anzeigeelemente mit einem solchen Betrachtungselement.

Aus vielerlei Anwendungen sind verschiedenen Techniken bekannt, sogenannte oder auch echte 3-dimensionale Bilder zu erzeugen. Die bekannteste Form ist die Holographie, die es als einzige ermöglicht echte 3-dimensionale Bilder von Gegenständen aber auch im Computer künstlich hergestellte Objekte darzustellen.

Andere Techniken arbeiten mit Linsenrastern oder Schlitzrastern, wieder andere verwenden Farbfilter oder Polarisationsfilter. Diese letztgenannten Techniken eignen sich prinzipiell sehr gut zur preiswerten Vervielfältigung, da die Bilder in konventioneller Weise in großen Auflagen gedruckt werden können. Die verwendeten Bildvorlagen, die zur Darstellung von Stereobildern, plastischen 3-dimensionalen Darstellungen oder von Filmsequenzen dienen werden lediglich mittels einer elektronischen Datenverarbeitung ineinander verschachtelt. Die Erstellung der Druckvorlage, eines Filmes und der Druckplatte erfolgt in gewohnter Weise für eine konventionelle Druckmaschine.

Der Unterschied zu einer konventionellen 2-dimensionalen Druckvorlage besteht primär in der höheren Auflösung, die an die Drucktechnik gestellt werden muß, da bei diesen Verfahren mehrere Bilder jedoch mindestens zwei Bilder ineinander komprimiert werden und somit die Druckauflösung um den Faktor der Anzahl der verwendeten Bilder höher sein muß. Im Anschluß an den Druck muß nun das Betrachtungselement, das die Verschachtelung für den Betrachter visuell rückgängig macht, auf die bedruckte Oberfläche appliziert werden.

Als Betrachtungselemente können Linsenraster, die als Folien oder Platten hergestellt werden, oder Schlitzmasken verwendet werden. Diese müssen nun mit hoher Genauigkeit auf die gedruckte Oberfläche von unterschiedlichen Materialien, wie zum Beispiel eine auf Rollen gewickelte Bahn aus Papier oder Kunststoffolie, ein Bogen aus Papier oder Folie oder ein kleineres Objekt aus Papier oder Kunststoff aufgebracht werden.

Eine Schwierigkeit hierbei liegt in der Genauigkeit mit der diese Elemente aufgebracht werden müssen, insbesondere wenn als bedruckter Stoff ein flexibles Material vorliegt, da dann eine Passergenauigkeit über die gesamte Fläche nur schwer zu garantieren ist. Ein weiterer Nachteil ist, daß der Prozess des Aufbringens in der Regel nicht innerhalb der Druckmaschine erfolgen kann, da die Betrachtungselemente häufig zu dick sind und damit in einer Druckmaschine nicht verarbeitet werden können.

Die gleiche Einschränkung gilt auch für Polarisationsfolien, die in Verbindung mit einer Polarisationsbrille jedem Auge des Betrachters nur das zugehörige Bild sichtbar machen. Auch diese Folien sind in der Regel zu dick und unflexibel und können nicht in gängigen Druckmaschinen verarbeitet werden. Eine weitere Einschränkung dieser Folien ist, daß jede Folie lediglich eine Polarisationsrichtung aufweist. Für eine sinnvolle Darstellung z.B. eines Stereobildes werden aber eng benachbarte Zonen unterschiedlicher Polarisationsrichtungen benötigt, beispielsweise Streifen mit abwechselnd horizontaler und vertikaler Polarisation. Die Breite solcher Streifen sollte dabei kleiner als 1 mm sein.

Anzeigeelemente sind ebenfalls in vielerlei Ausführungen für unterschiedlichste Anwendungen kommerziell erhältlich. So gibt es kleine und kleinste Displays zur Anzeige von Zahlen oder Symbolen, wie sie in Form von Flüssigkristallanzeigen (LCD-Displays) beispielsweise in Uhren oder Mobiltelefonen verwendet werden.

Größere Displays finden sich im Computerbereich in Form von Flüssigkristallbildschirmen oder Bildschirmen mit Kathodenstrahlröhre. Alle diese Anzeigen dienen jedoch dazu ein 2-dimensionales Bild darzustellen.

Erst in letzter Zeit kommen vereinzelt Systeme auf den Markt, die eine Dreidimensionalität der Betrachtung ermöglichen sollen. So wird häufig mit zwei LCD-Displays gearbeitet, die in eine vom Betrachter zu tragenden Brille integriert sind.

Nachteilig hierbei ist, daß lediglich ein Betrachter die Informationen sieht, deren Ansteuerung einen zusätzlichen apparativen Aufwand erfordert und daß die Brillen teuer sind. Zudem bietet das relativ hohe Gewicht nur einen geringen Tragekomfort über längere Zeit. Andere Systeme arbeiten mit elektrisch geschalteten linearen Polarisationsfiltern vor konventionellen Bildschirmen. Abhängig von der angelegten Spannung wird hier das vom Bildschirm emittierte Licht horizontal oder vertikal polarisiert. Der Betrachter muß hier ebenfalls eine Brille tragen, die lediglich aus einer dünnen Folie bestehen kann.

Vor jedem Auge ist ein Polarisationsfilter angebracht, deren Polarisationsebenen rechtwinklig zueinander stehen. Hierdurch gelangt in jedes Auge lediglich horizontal oder vertikal polarisiertes Licht. Das Umschalten des Polarisators vor dem Bildschirm wird nun dazu verwendet jedem Auge des Betrachters das richtige Teilbild zu übermitteln, indem der Bildinhalt im Takt mit dem Umschalten des Polarisators synchronisiert ist. Hält der Betrachter seinen Kopf mit der Polarisationsbrille parallel zu dem Polarisationsfilter vor dem Display, so sieht er ein stereographisches Bild, das eine hohe räumliche Darstellung bewirken kann.

Nachteilig bei diesem Verfahren ist der teure großflächige Polarisator vor dem Bildschirm, der meist nur träge reagiert. Es stellt sich daher ein flimmerndes Bild ein, da sich die gesamte Bildwiederholfrequenz nun auf twei Bilder aufteilt und somt jedes Auge nur die halbe Bildwiederholfrequenz sieht. Darüber hinaus darf der Betrachter den Kopf nicht kippen, da sonst unerwünschte Bildanteile des jeweils anderen Auges betrachtet werden, was zu Doppelbildern führt.

Aufgabe der Erfindung ist es ein Verfahren bereitzustellen, mit dem es möglich ist Vervielfältigungen von einfarbigen oder mehrfarbigen Stereobildern, 3-dimensionalen und/oder bewegten Bildern unter Verwendung kommerzieller Druckmaschinen herzustellen. Weiterhin ist es Aufgabe der Erfindung ein Verfahren zu realisieren, das es ermöglicht mit konventionellen Anzeigevorrichtungen einem Betrachter eine stereographische dreidimensional wirkende Betrachtung zu ermöglichen, ohne daß teure zusätzliche Geräte oder aufwändige bauliche Einrichtungen erforderlich sind. Das Verfahren soll es auch ermöglichen, bereits fertig hergestellte Anzeigevorrichtungen mit der Möglichkeit dieser Betrachtung nachzurüsten.

Diese Aufgabe wird erfindungsgemäß dadurch gelöst, dass auf ein Substrat mittels eines Druckverfahrens z.B. mittels Offsetdruck, Siebdruck, Flexodruck oder Tiefdruck wenigstens ein Auftragsmittel mit polarisationsbeeinflussender Wirkung auf wenigstens zwei benachbarte Zonen des Substrates derart aufgetragen wird, dass das Auftragsmittel in benachbarten Zonen unterschiedliche polarisationsbeeinflussende Wirkung hat.

Licht, welches vom Substrat ausgeht, z.B. durch Reflexion oder durch Emission erfährt demnach in den benachbarten Zonen eine unterschiedliche Beeinflussung der Polarisation. Beispielsweise kann das Licht aus unterschiedlichen Zonen verschiedene lineare oder auch verschiedene elliptische, insbesondere zirkulare Polarisation aufweisen, so dass es durch adäquat ausgesuchte Hilfsmittel, wie z.B. Polarisationsbrillen durchgelassen oder geblockt wird.

Es gibt also immer wenigstens zwei Gruppen von Zonen, die verschiedenartigst ineinander verschachtelt sein können, wobei innerhalb einer Gruppe die polarisationsbeinflussende Wirkung jeder einzelnen Zone gleich ist und wobei die polarisationsbeinflussende Wirkung in Zonen verschiedener Gruppen unterschiedlich ist.

Bei einer Betrachtungsweise, wie sie im Stand der Technik bekannt ist, also z.B. mit den Polarisationsbrillen kann so sichergestellt werden, dass Licht, welches einer Zone mit einer ersten polarisationsbeinflussenden Wirkung entstammt bzw. durch diese hindurchgetreten ist nur mit dem linken Auge eines Betrachters wahrgenommen werden kann, wohingegen Licht, welches einer Zone mit einer anderen polarisationsbeinflussenden Wirkung entstammt bzw. durch diese hindurchgetreten ist nur mit dem rechten Auge eines Betrachters wahrgenommen werden kann oder umgekehrt.

Unter der polarisationsbeeinflussenden Wirkung wird grundsätzlich die Möglichkeit verstanden Licht in einer Polarsationseigenschaft zu verändern, also z.B. aus linear polarisiertem Licht zirkulares zu machen oder umgekehrt oder aber auch nur eine bestimmte Polarisationsrichtung (linear, elliptisch, zirkular) durchzulassen.

Zur Erzielung der polarisationsbeinflussenden Wirkung kann ein Auftragsmittel mit doppelbrechender Wirkung aufgetragen werden, so dass das Auftragsmittel in benachbarten Zonen unterschiedliche doppelbrechende Wirkung hat. Bevorzugt wird hierzu ein Auftragsmittel eingesetzt, welches Flüssigkristalle, insbesondere nematische, cholesterische oder smektische Flüssigkristalle z.B. der Firma Merck KGaA umfasst. Diese Flüssigkristalle können in einer insbesondere mesomorphen Schmelze oder in Lösung mit z.B. einem oder mehreren Alkoholen vorliegen, so dass sie in Druckmaschinen verarbeitbar sind. Das Auftragsmittel kann ein oder mehrere fixierbare Bindemittel (Acrylate, Epoxydharze), Zusatzstoffe, Pigmente, Photoinitiatoren, Farbstoffe oder ähnliches umfassen.

Flüssigkristalle können je nach ihrer Zusammensetzung unterschiedliche Eigenschaften aufweisen. Ein Großteil der kommerziell hergestellten und erhältlichen Flüssigkristalle wird in der Elektronik verwendet, wo diese Substanzen in Anzeigeelementen eingesetzt werden. Ausgenutzt wird in dieser Anwendung die Eigenschaft der Flüssigkristalle sich innerhalb einer dünnen Schicht von nur wenigen Mikrometern zueinander auszurichten und die Polarisationsebene von einfallendem Licht zu drehen. Um diese Eigenschaft sichtbar zu machen wird die Flüssigkristallschicht zwischen Polarisatoren gebracht, wobei der erste Polarisator das einfallende Licht polarisiert und der zweite Polarisator als Analysator für das durch die Flüssigkristallschicht gelangte Licht dient. Stimmt die Polarisationsebene des an den Analysator ankommenden Lichtes nicht mit der Polarisationsebene des Analysators überein, so kann kein Licht den Analysator passieren und das Anzeigeelement erscheint dunkel.

Die Eigenschaft der Flüssigkristalle, die Polarisationsebene von einfallendem Licht zu drehen, kann durch Anlegen eines elektrischen Feldes an die
Flüssigkristallschicht dahingehend beeinflusst werden, daß dieser Effekt unterdrückt wird. Damit ergeben sich zwei Zustände, die es ermöglichen ein elektrisch ansteuerbares Anzeigeelement herzustellen. Die Flüssigkristalle in den Displays liegen dabei in ihrer flüssigen Form vor, da hier ein dynamischer Betrieb gefordert ist.

Dieser Polarisationseffekt der Flüssigkristalle lässt sich durch das Einbetten in eine Polymermatrix fixieren. Verwendet man als Polymermatrix zum Beispiel strahlungshärtende Polymere so lassen sich diese in konventionellen Druckmaschinen, die für strahlungshärtende Farben und Lacke ausgerüstet sind, verarbeiten.

So besteht die Möglichkeit das wenigstens eine Auftragsmittel z.B. auf ein Substrat aufzudrucken, welches wenigstens zwei Bildinformationen umfasst, die zonenweise ineinander verschachtelt sind, wobei die Zonen, die zu einer ersten Bildinformation gehören, von einem Auftragsmittel mit einer z.B. ersten polarisationsbeeinflussenden Wirkung und die Zonen, die zu einer anderen z.B. zweiten Bildinformation gehören, von einem Auftragsmittel einer anderen z.B. zweiten polarisationsbeeinflussenden Wirkung überdeckt wird.

Hierbei können die Bildinformationen z.B. auf das zu beschichtende Substrat vor der Beschichtung mittels üblicher Druckverfahren aufgebracht sein

Die Bildinformationen können z.B. ein Objekt aus leicht unterschiedlichen Richtungen oder aufeinanderfolgende Bewegungsabläufe repräsentieren, wobei diese Bildinformationen z.B. in Form von Einzelbildern einer stereographischen oder 3-dimensionalen Darstellung verschachtelt sein können, wie es im Stand der Technik bekannt ist. Wird nun jede Bildinformation in Zonen kleiner Teilbildinformationen aufgeteilt, die Zonen unterschiedlicher Bildinformationen ineinander durch Benachbarung verschachtelt und die zu jeweils einer Bildinformation gehörenden Zonen mittels eines Druckverfahrens mit einem Auftragsmittel einer bestimmten polarisationsbeeinflussenden Wirkung z.B. Flüssigkristallen bedruckt, so kann ein Betrachter mit passend ausgewählter Polarisationsbrille z.B. ein 3D-Bild erkennen.

Die Verschachtelung kann in einer beliebigen Anordnung ausgeführt sein, muß jedoch genau der späteren Anordnung der Polarisationselementen entsprechen, d.h. der gleichen Zonenanordnung des polarisationsbeeinflussenden Auftrags. Diese Verschachtelung erfolgt zweckmäßiger Weise mittels Computer und entsprechender Software.

Aus den so erstellten Daten können in nachfolgenden Schritten in bekannter Weise Druckplatten hergestellt werden. In einer konventionellen Druckmaschine werden nun mit diesen Druckplatten die Bilder und Texte in konventioneller Art einfarbig oder mehrfarbig auf den Bedruckstoff bzw. ein beliebiges Substrat aufgedruckt.

In einem nachfolgenden Prozess kann dann entsprechend der zuvor in der Druckvorstufe gewählten Anordnung der Polarisationselemente bzw. Zonen an die geforderten Stellen der z.B farblose Flüssigkristalllack als Auftragsmittel aufgedruckt werden. Dies kann in zwei unterschiedlichen Lackwerken geschehen, da jedem Auge des Betrachters das individuelle Bild angeboten werden muß und somit zwei unterschiedliche Polarisationsrichtungen benötigt werden.

Die Polarisationen sind dabei entweder linear in den Richtungen horizontal und vertikal oder zirkular in den Richtungen linkszirkular und rechtszirkular polarisiert. Zur Unterstützung der Ausrichtung der Flüssigkristalle können bekannte Verfahren wie das vorherige Reiben der Oberfläche, elektrische oder magnetische Felder verwendet werden oder eine zusätzliche Orientierungsschicht aufgebracht werden.

Damit der Betrachter den 3-dimensionalen Effekt erkennt, benötigt er vor jedem Auge einen Polarisationsfilter, welcher nur das diesem Auge zugehörige Licht hindurchlässt. Zum Beispiel wird je ein Bild für das linke und das rechte Auge gedruckt. Jedes dieser Bilder wird mit einem anderen polarisierenden Lack überdruckt, so zum Beispiel das Bild für das linke Auge mit einem linksdrehenden Polarisationslack und das Bild für das rechte Auge mit einem rechtsdrehenden Polarisationslack. Damit der Betrachter den richtigen Betrachtungseindruck erhält, benötigt er vor jedem Auge den richtigen Polarisationsfilter, in dem Beispiel vor dem linken Auge einen linksdrehenden Polarisator und vor dem rechten Auge einen rechtsdrehenden Polarisator.

Jeder Polarisator hat die Aufgabe nur das für dieses Auge bestimmte Licht durchzulassen. Dabei ist es unerheblich, ob linke und rechte Bilder nebeneinander gedruckt sind, oder ineinander verschachtelt gedruckt wurden, solange die polarisierenden Lacke in der gleichen verschachtelten Art wie die Druckvorlage auf die gedruckten Bilder aufgebracht wurden. Dabei sollten die Lacke möglichst vollständig die gedruckten Bilder bedecken, sich gegenseitig jedoch nicht überlagern, um unerwünschte Effekte zu vermeiden.

Ebenso kann auf ein transparentes Substrat aufgedruckt werden, welches z.B. zusätzlich selbst eine polarisationsbeeinflussende Wirkung aufweisen kann. Ein solches bedrucktes Substrat kann z.B. als Betrachtungselement vor eine konventionelle Anzeigevorrichtung mit frei programmierbaren Anzeigeelementen, also z.B. Pixeln vorgesetzt werden.

Die Anzeigevorrichtung kann dann so programmiert werden, dass wie oben zu einem bedruckten Substrat beschrieben, die Anzeige wenigstens zwei ineinander zonenweise verschachtelte Bilder zeigt, wobei durch entsprechende Anpassung der Zonen des bedruckten Substrates an die dargestellte Zonen der Anzeigevorrichtung ein Betrachter mit passend gewählter Polarisationsbrille von einer herkömmlichen Anzeigevorrichtung ein dreidimensionales Bild sieht. Diese Ausführung ist besonders vorteilhaft, da durch die Programmierbarkeit die Möglichkeit gegeben ist, bewegte Bilder oder Filme dreidimensional anschauen zu können.

Bevorzugt werden hierbei benachbarte Zonen von Auftragsmittel mit unterschiedlicher polarisationsbeeinflussender Wirkung derart angeordnet, dass deren Form und/oder Anordnung einer Form und/oder Anordnung der bildgebenden Anzeigeeinheiten einer Anzeigevorrichtung entspricht. So kann jedem einzelnen bildgebendem Anzeigeelement einer Anzeigevorrichtung durch Vorschaltung eines erfindungsgemäß hergestellten Betrachtungselementes eine bestimmte Polarisationseigenschaft zugeordnet werden.

In der Anwendung bei LCD-Anzeigevorrichtungen, z.B. Displays wird auf z.B. die äußere Polarisationsfolie des LCD Displays, die ein transparentes Substrat im Sinne der Erfindung darstellt, eine transparente doppelbrechende Schicht so aufgebracht, daß das aus dem Display austretende und zunächst linear polarisierte Licht nach Durchgang durch die doppelbrechende Schicht z.B. eine zirkulare Polarisation aufweist. Da für eine stereographische Betrachtung zwei unterschiedliche Polarisationszustände erforderlich sind wird die Beschichtung zonenweise so aufgebracht, daß benachbarte Zonen eine unterschiedliche zirkulare Polarisation aufweisen. Die Anordnung der Zonen kann dabei streifenförmig, quadratisch, punktförmig oder beliebig sein, wobei eine Anpassung an das vom Display vorgegeben Punktmuster der Anzeigepunkte von Vorteil ist.

Das Aufbringen der doppelbrechenden Schicht geschieht zweckmäßigerweise mittels Druckverfahren, wobei die Drucktechnik beliebig sein kann. So kann für fertige Anzeigeelemente ein Siebdruckverfahren oder ein Tampondruckverfahren am geeignetsten sein. Wird die Beschichtung vor der Montage des Polarisationsfilters auf das Display aufgebracht, so kann ein Flexodruckverfahren, Offsetverfahren oder allgemein ein rotativ arbeitendes Druckverfahren günstiger sein. Auch kann die Verwendung von frei programmierbaren Tintenstrahldruckern von Vorteil sein.

Die Orientierung der aufgebrachten Schicht erfolgt z.B. durch Vorbehandlung des Substrates wie Reiben oder Aufbringen einer Orientierungsschicht, kann aber auch durch gezielten Einsatz von elektrischen oder magnetischen Feldern erfolgen. Zur Erzeugung unterschiedlicher doppelbrechender Eigenschaften benachbarten Zonen können die doppelbrechenden Schichten aus unterschiedlich zusammengesetzten Lacken bestehen. In diesem Fall werden die doppelbrechenden Schichten nacheinander aufgebracht. Bei Verwendung des gleichen Lackes in nachfolgenden Druckeinheiten muß in einer anderen Ausführungsform zwischen den Druckwerken die Orientierung an den zu bedruckenden Bereichen so geändert werden, daß sich nach dem Bedrucken die gewünschte Orientierung der doppelbrechenden Schicht einstellt.

In einer anderen Ausführungsform kann die Beschichtung direkt auf eine linear polarisierende Folie oder Platte aufgebracht werden, wobei das so beschichtete Element als extern anzubringende Filterscheibe vor einem konventionellen Bildschirm oder Monitor verwendet werden kann. Bestehende Monitore oder Bildschirme lassen sich so zu einer stereographischen Anzeigeeinheit nachrüsten.

Bei allen Ausführungsformen kann die Zonenanordnung grundsätzlich beliebig sein. Bevorzugt werden benachbarte Zonen mittels der Druckverfahren streifenförmig nebeneinander angeordnet. Auch können die zu bedruckenden Substrate beliebige Form haben z.B. auch bogenförmig, bahnförmig oder beliebige Objekte darstellen, also auch auf nicht ebene Substraten kann gedruckt werden.

Bei dem erfindungsgemäßen Verfahren kann z.B. in einem Druckschritt ein einziges Flüssigkristalle umfassendes Auftragsmittel auf ein Substrat aufgetragen werden wobei bevorzugt automatisch sich die Flüssigkristalle in benachbarten Zonen unterschiedlich orientieren, insbesondere dadurch, dass die bedruckten Zonen ein auf die Flüssigkristalle orientierend wirkendes Mittel, insbesondere Strukturen aufweisen, die durch eine Krafteinwirkung auf die Flüssigkristalle orientierend wirken.

Beispielsweise kann auf die zu bedruckenden Zonen vorher ein weiteres Auftragsmittel aufgebracht werden, welches eine Orientierung der Flüssigkristalle zonenweise in eine gewünschte Wirkung bewirkt. Die Zonen können ein Struktur aufweisen, die eine Kraft auf die Flüssigkristalle ausübt, wobei die Struktur mechanisch oder elektrostatisch sein kann. Die gezielte Applikation elektrischer oder magnetischer Felder kann ebenfalls eine Vorzugsrichtung in den Zonen einstellen. Auch können die bedruckten Substrate gezielt lokal, insbesondere in verschiedenen Zonen unterschiedlich thermisch behandelt werden, z.b. durch Erwärmung.

Alternativ können in nacheinanderfolgenden Druckschritten in benachbarte Zonen unterschiedliche Auftragsmittel, insbesondere mit unterschiedlichen Flüssigkristallen aufgetragen werden. Es kann auch in nacheinanderfolgenden Druckschritten in benachbarte Zonen dasselbe Auftragsmittel aufgetragen werden, wobei zwischen den Druckschritten das Substrat gedreht wird oder die Orientierungswirkung der zu bedruckenden Zonen geändert wird.

Wesentlich ist für das erfindungsgemäße Verfahren, dass gegenüber dem Stand der Technik anstelle der bekannten Polarisationsfolien eine Beschichtung verwendet wird, welche in Abhängigkeit vom Verfahren oder deren Zusammensetzung unterschiedliche Polarisationseigenschaften aufweist. Zur Verwendung kommt eine Beschichtung, die ganz oder teilweise aus Flüssigkristallen besteht und die nach dem Auftragen auf eine Oberfläche des Substrates ausgehärtet werden kann. Die Aushärtung kann beispielsweise durch die Einwirkung von Strahlung, durch oxidative Härtung oder durch physikalische Trocknung geschehen.

## Patentansprüche

1. Verfahren zur Herstellung eines polarisationsbeeinflussenden Betrachtungselementes, insbesondere zur Erzeugung/Betrachtung von dreidimensional wirkenden Bildern von Druckerzeugnissen oder Anzeigevorrichtungen, **dadurch gekennzeichnet, dass** auf ein Substrat mittels eines Druckverfahrens wenigstens ein Auftragsmittel mit polarisationsbeeinflussender Wirkung auf wenigstens zwei benachbarte Zonen des Substrates derart aufgetragen wird, dass das Auftragsmittel in benachbarten Zonen unterschiedliche polarisationsbeeinflussende Wirkung hat.

2. Verfahren nach Anspruch 1, **dadurch gekennzeichnet, dass** ein Auftragsmittel mit doppelbrechender Wirkung aufgetragen wird, so dass das Auftragsmittel in benachbarten Zonen unterschiedliche doppelbrechende Wirkung hat.

3. Verfahren nach einem der vorherigen Ansprüche, **dadurch gekennzeichnet, dass** ein Auftragsmittel aufgetragen wird, welches Flüssigkristalle, insbesondere nematische, cholesterische oder smektische Flüssigkristalle umfasst.

4. Verfahren nach einem der vorherigen Ansprüche, **dadurch gekennzeichnet, dass** in einem Druckschritt ein Flüssigkristalle umfassendes Auftragsmittel auf ein Substrat aufgetragen wird und sich die Flüssigkristalle in benachbarten Zonen unterschiedlich orientieren, insbesondere dadurch, dass die bedruckten Zonen ein auf die Flüssigkristalle orientierend wirkendes Mittel, insbesondere Strukturen aufweisen, die durch eine Krafteinwirkung auf die Flüssigkristalle orientierend wirken.

5. Verfahren nach einem der vorherigen Ansprüche, **dadurch gekennzeichnet, dass** in nacheinanderfolgenden Druckschritten in benachbarte Zonen unterschiedliche Auftragsmittel, insbesondere mit unterschiedlichen Flüssigkristallen aufgetragen werden.

6. Verfahren nach einem der vorherigen Ansprüche, **dadurch gekennzeichnet, dass** in nacheinanderfolgenden Druckschritten in benachbarte Zonen dasselbe Auftragsmittel aufgetragen wird, wobei zwischen den Druckschritten das Substrat gedreht wird oder die Orientierungswirkung der zu bedruckenden Zonen geändert wird.

7. Verfahren nach einem der vorherigen Ansprüche, **dadurch gekennzeichnet, dass** auf ein transparentes Substrat aufgedruckt wird, insbesondere welches eine polarisationsbeeinflussende Wirkung aufweist.

8. Verfahren nach einem der vorherigen Ansprüche, **dadurch gekennzeichnet, dass** auf ein Substrat aufgedruckt wird, welches wenigstens zwei Bildinformationen umfasst, die zonenweise ineinander verschachtelt sind, wobei die Zonen einer Bildinformation von einem Auftragsmittel mit einer polarisationsbeeinflussenden Wirkung und die Zonen einer anderen Bildinformation von einem Auftragsmittel einer anderen polarisationsbeeinflussenden Wirkung überdeckt sind.

9. Verfahren nach einem der vorherigen Ansprüche, **dadurch gekennzeichnet, dass** benachbarte Zonen streifenförmig nebeneinander angeordnet werden.

10. Verfahren nach einem der vorherigen Ansprüche, **dadurch gekennzeichnet, dass** benachbarte Zonen von Auftragsmittel mit unterschiedlicher polarisationsbeeinflussender Wirkung derart angeordnet werden, dass deren Form und/oder Anordnung einer Form und/oder Anordnung der bildgebenden Anzeigeeinheiten einer Anzeigevorrichtung entspricht.

11. Betrachtungselement hergestellt gemäß einem Verfahren nach einem der vorherigen Ansprüche.

12. Anzeigevorrichtung zur Anzeige frei programmierbarer Informationen mittels einzeln ansteuerbarer Anzeigeelemente wobei in Betrachtungsrichtung vor der Anzeigevorrichtung ein Betrachterelement nach Anspruch 11 angeordnet ist.

13. Verwendung einer Anzeigevorrichtung mit einzeln ansteuerbaren Anzeigelementen und mit einem Betrachterelement nach Anspruch 11 zur visuell dreidimensional wirkenden Darstellung stehender oder bewegter Bilder.
